(19) **Europäisches Patentamt**
**European Patent Office**
**Office européen des brevets**

(11) **EP 2 704 352 A1**

(12) **EUROPEAN PATENT APPLICATION**
published in accordance with Art. 153(4) EPC

(43) Date of publication:
**05.03.2014 Bulletin 2014/10**

(21) Application number: **12853233.0**

(22) Date of filing: **27.07.2012**

(51) Int Cl.:
**H04L 9/08** $^{(2006.01)}$ **H04L 9/30** $^{(2006.01)}$

(86) International application number:
**PCT/CN2012/079260**

(87) International publication number:
**WO 2013/078874 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2011 CN 201110390252**

(71) Applicant: **Huawei Technologies Co., Ltd.
Shenzhen, Guangdong 518129 (CN)**

(72) Inventors:
• **XU, Lei
Shenzhen
Guangdong 518129 (CN)**

• **WU, Xiaoxin
Shenzhen
Guangdong 518129 (CN)**
• **ZHANG, Xinwen
Shenzhen
Guangdong 518129 (CN)**

(74) Representative: **Maiwald Patentanwalts GmbH
Engineering
Elisenhof
Elisenstrasse 3
80335 München (DE)**

(54) **METHOD, DEVICE AND SYSTEM FOR PROCESSING ENCRYPTED TEXT**

(57) Embodiments of the present invention disclose a ciphertext processing method, apparatus, and system. The method includes: selecting, by a ciphertext sending end, a random secret value; calculating a private key of a local end according to a partial private key acquired by the local end and the random secret value; calculating a proxy key according to the private key of the local end and a public key publicized by a ciphertext receiving end, where the public key publicized by the ciphertext receiving end is calculated by the ciphertext receiving end according to a random secret value selected by the cipher-text receiving end and a system public parameter; and sending the proxy key, so that the ciphertext receiving end acquires a ciphertext obtained after a re-encryption operation is performed, according to the proxy key, on a ciphertext sent by the ciphertext sending end, and performs decryption. Existing defects of a ciphertext re-encrypting technology in a collusion aspect can be effectively avoided by adopting the embodiments of the present invention, thereby better ensuring information security, and meanwhile, implementation of the present invention avoids using a public key infrastructure (PKI), thereby having better extensibility.

FIG. 1

**Description**

**TECHNICAL FIELD**

The present invention relates to the field of communications, and in particular to a ciphertext processing method, apparatus, and system.

**BACKGROUND**

A ciphertext re-encrypting technology is a technology for converting a ciphertext in the case of not leaking ciphertext information so as to convert a received ciphertext to a ciphertext encrypted by using a public key of a ciphertext receiving end.

Specifically, it is assumed that two users A and B exist, where a public key of user A is $pk_A$, and a private key of user A is $sk_A$; a public key of user B is $pk_B$, and a private key of user B is $sk_B$.

A proxy key $rk_{AB}$ may be calculated by using public/private key information of users A and B.

If holding the proxy key $rk_{AB}$, user C may convert a message encrypted by using the $pk_A$ to a message encrypted by using the $pk_B$. In the conversion process, user C cannot see a plaintext of the message. After the conversion is finished, user B may decrypt the converted ciphertext by using its own private key $sk_B$ to obtain the plaintext of the message.

The existing ciphertext re-encrypting technology has defects in the aspect of collusion, that is, if user B and user C perform collusion, they can calculate a part of information of the private key of user A, resulting in that the message encrypted by user A is no longer secure.

In addition, the existing ciphertext re-encrypting technology depends on a public key infrastructure (PKI), and extensibility of the public key infrastructure is poorer, thereby being incapable of supporting a user group with a super-large scale.

**SUMMARY**

Embodiments of the present invention provide a ciphertext processing method, apparatus, and system, which make a message encrypted by a user securer, and allow a receiving end to perform a re-encryption operation according to demands, so that a ciphertext of the message can be more flexibly processed.

An embodiment of the present invention provides a ciphertext processing method, including:

calculating, by a ciphertext sending end, a private key of a local end according to a random secret value selected by the ciphertext sending end and a partial private key acquired by the ciphertext sending end, and calculating a public key of the local end according to the random secret value and a system public parameter;

calculating a proxy key according to the private key of the local end and a public key publicized by a ciphertext receiving end, where the public key publicized by the ciphertext receiving end is calculated by the ciphertext receiving end according to a random secret value selected by the ciphertext receiving end and the system public parameter; and

sending the proxy key, so that the ciphertext receiving end acquires a ciphertext obtained after a re-encryption operation is performed, according to the proxy key, on a ciphertext sent by the ciphertext sending end.

Accordingly, an embodiment of the present invention further provides a ciphertext processing apparatus, including:

an encrypting module, configured to encrypt a message to obtain a ciphertext;

a key acquiring module, configured to calculate a private key of a local end according to a random secret value selected by the local end and a partial private key acquired by the local end, and calculate a public key of the local end according to the random secret value and a system public parameter;

a calculating module, configured to calculate a proxy key according to the private key calculated by the key acquiring module and a public key publicized by a ciphertext receiving end, where the public key publicized by the ciphertext receiving end is calculated by the ciphertext receiving end according to a random secret value selected by the ciphertext receiving end and the system public parameter; and

a sending module, configured to send the proxy key calculated by the calculating module and the ciphertext encrypted by the encrypting module, so that the ciphertext receiving end acquires a ciphertext obtained after a re-encryption operation is performed, according to the proxy key, on the ciphertext sent by a ciphertext sending end.

Accordingly, an embodiment of the present invention further provides a ciphertext processing system, including:

a ciphertext sending end, a ciphertext receiving end, and a key generating mechanism, where:

the key generating mechanism is configured to release a system public parameter and partial private keys corresponding to the ciphertext sending end and the ciphertext receiving end;

the ciphertext receiving end is configured to calculate its own public key according to a random secret value selected by the ciphertext receiving end and the system public parameter, and publicize the public key;

the ciphertext sending end is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end, and send the proxy key to the ciphertext receiving end; and

the ciphertext receiving end is further configured to receive the proxy key sent by the ciphertext sending end, perform, according to the proxy key, a re-encryption operation on a ciphertext sent by the ciphertext sending end, convert the ciphertext to a ciphertext encrypted by using its own public key, and decrypt the converted ciphertext encrypted by using its own public key.

Accordingly, an embodiment of the present invention further provides another ciphertext processing system, including: a ciphertext sending end, a ciphertext receiving end, a proxy, and a key generating mechanism, where:

the key generating mechanism is configured to release a system public parameter and partial private keys corresponding to the ciphertext sending end and the ciphertext receiving end;

the ciphertext receiving end is configured to calculate its own public key according to a random secret value selected by the ciphertext receiving end and the system public parameter, and publicize the public key;

the proxy is connected to the ciphertext receiving end and the ciphertext sending end;

the ciphertext sending end is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end, and send the proxy key to the proxy;

the proxy is further configured to receive the proxy key sent by the ciphertext sending end, perform, according to the proxy key, a re-encryption operation on a ciphertext sent by the ciphertext sending end, convert the ciphertext to a ciphertext encrypted by using the public key of the ciphertext receiving end, and send the converted ciphertext to the ciphertext receiving end; and

the ciphertext receiving end is further configured to decrypt the converted ciphertext. In implementation of the embodiments of the present invention, a public key and a private key are calculated by selecting a random secret value to avoid using a public key infrastructure (PKI), thereby having better extensibility.

A defect that a message encrypted by a local end may be randomly decrypted because of collusion of a receiving end and a proxy can be avoided by generating and using a proxy key with a special structure, and therefore not only a message encrypted by a user is securer, but also the receiving end can perform a re-encryption operation according to demands, so that the ciphertext of the message can be more flexibly processed.

**BRIEF DESCRIPTION OF DRAWINGS**

The following briefly introduces the accompanying drawings required for describing the embodiments or the prior art to illustrate the technical solution in the embodiments of the present invention or in the prior art more clearly. Apparently, the accompanying drawings in the following description show merely some embodiments of the present invention, and a person of ordinary skill in the art may still derive other drawings from these accompanying drawings without creative efforts.

FIG. 1 is a schematic structural diagram of a ciphertext processing system according to an embodiment of the present invention;

FIG. 2 is a schematic structural diagram of another ciphertext processing system according to an embodiment of the present invention;

FIG. 3 is a schematic structural diagram of a first embodiment of a ciphertext processing apparatus according to the present invention;

FIG. 4 is a schematic structural diagram of a second embodiment of a ciphertext processing apparatus according to the present invention;

FIG. 5 is a schematic flowchart of a first embodiment of a ciphertext processing method according to the present invention;

FIG. 6 is a schematic flowchart of a second embodiment of a ciphertext processing method according to the present invention; and

FIG. 7 is a schematic flowchart of a third embodiment of a ciphertext processing method according to the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

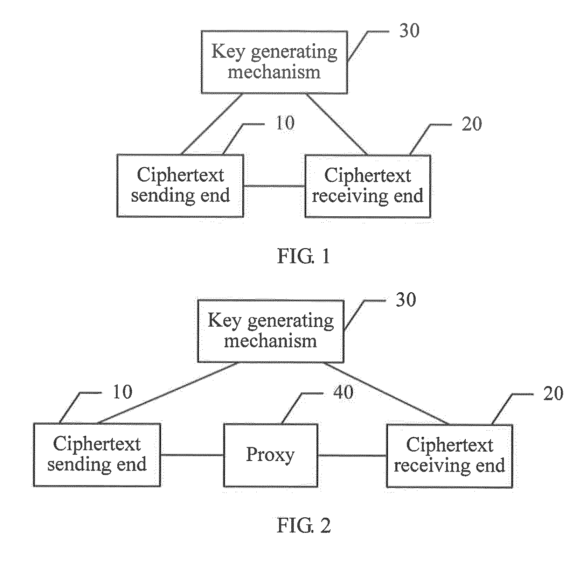

Referring to FIG. 1, it is a schematic structural diagram of a ciphertext processing system according to an embodiment of the present invention. The system in this embodiment includes: a ciphertext sending end 10, a ciphertext receiving end 20, and a key generating mechanism 30. The key generating mechanism 30 is a key generating and releasing server. In this embodiment, the ciphertext sending end 10 is marked as a user A end, and the ciphertext receiving end 20 is marked as a user B end.

The key generating mechanism 30 is configured to release a system public parameter and partial private keys corresponding to the ciphertext sending end 10 and the ciphertext receiving end 20;

the ciphertext receiving end 20 is configured to calculate its own public key according to a random secret value selected by the ciphertext receiving end 20 and the system public parameter, and publicize the public key;

the ciphertext sending end 10 is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end 20, and send the proxy key to the ciphertext receiving end 20; and

the ciphertext receiving end 20 is further configured to receive the proxy key sent by the ciphertext sending end 10, perform, according to the proxy key, a re-encryption operation on a ciphertext sent by the ciphertext sending end 10, convert the ciphertext to a ciphertext encrypted by using its own public key, and decrypt the converted ciphertext encrypted by using its own public key.

Specifically, the ciphertext sending end 10 acquires the partial private key of the local end from the key generating mechanism 30. The ciphertext sending end 10 calculates the private key of the local end according to the partial private key and the random secret value randomly selected by the ciphertext sending end 10. Similarly, the ciphertext receiving end 20 may acquire its own private key of the ciphertext receiving end 20 according to this manner.

In this embodiment, the manner through which the key generating mechanism 30 generates the system public parameter and the partial private keys of the ciphertext sending end 10 and the ciphertext receiving end 20 may be that:

the key generating mechanism 30 generates the system public parameter: preset cyclic groups $G_1$ and $G_2$ with prime order and obtains a bilinear mapping $e : G_1 \times G_1 \rightarrow G_2$, where the $G_1$ is a point group on an elliptic curve, the $G_2$ is a multiplicative group on a finite domain; operations on the $G_1$ and the $G_2$ are represented as "multiplication" operations, a specific operation rule is performed according to operation rules on the elliptic curve and the finite domain; and a generating element $g$ in the $G_1$ is randomly selected, and hash functions $H_1 : \{0.1\}^* \rightarrow G_1$, and $H_2 : G_2 \rightarrow G_1$ are selected, where a calculation process of the two hash functions is that: for $H_1$, an input 0 and 1 string with a random length is used as an integer $i$, and $g^i$ is calculated as an output, and for $H_2$, any element on the input $G_2$ is used as an integer $i$, and $g^i$ is calculated as an output; and the key generating mechanism 30 randomly selects an integer $s$ as its own main secret and calculates $g^s$ as a basic parameter. The key generating mechanism 30 releases the preset cyclic groups $G_1$ and $G_2$ with prime order, the $g$, the two hash functions $H_1$ and $H_2$, and the basic parameter $g^s$ as the public parameters. It may be understood that the hash functions $H_1$ and $H_2$ herein are only one of selected hash function combinations, and during specific implementation, other specific hash functions may also be used.

For the ciphertext sending end 10, the key generating mechanism 30 calculates $g_A$ by adopting a formula: $g_A = H_1(id_A)$, where the $id_A$ is an identity of the ciphertext sending end 10, for example, an e-mail address. Then, $g^s_A$ is sent to the ciphertext sending end 10 as a partial private key of the ciphertext sending end 10.

Similarly, the partial private key of the ciphertext receiving end 20 may be obtained and sent to the ciphertext receiving end 20.

After receiving the partial private key, the ciphertext sending end 10 may first randomly select integers $x_A$ and $t$ as the random secret value, and then calculate its own private key and public key according to the partial private key of the local end, the random secret value, and the system public parameter.

A formula for the ciphertext sending end 10 to acquire the public key $pk_A$ may be: $pk_A = (g^{sx_A}, g')$. The $t^{th}$ power of g represents that t pieces of gs are "multiplied", and a specific multiply operation rule is performed according to an operation rule on the point group of the elliptic curve.

A formula for the ciphertext sending end 10 to calculate the private key $sk_A$ of the ciphertext sending end 10 according to the selected integer $x_A$ and the element $g^s_A$ on the cyclic group $G_1$ may be: $sk_A = g_A^{sx_A}$.

Similarly, the ciphertext receiving end 20 may also acquire its own private key and public key according to a manner same as the manner used by the ciphertext sending end 10.

Encrypting, by the ciphertext sending end 10, a message $m$ to be encrypted by adopting its own public key may specifically include the following two manners:

If it is expected that a ciphertext obtained by encrypting $m$ can be sent by a proxy to others for decryption, the ciphertext sending end 10 randomly selects an integer $r$, and calculates the ciphertext $C_1 = (g^{tr}, g^r, m \cdot e(g_A, g^{sx_A})^r)$; and if it is expected that a ciphertext obtained by encrypting $m$ cannot be sent by a proxy to others for decryption, the ciphertext sending end 10 randomly selects an integer $r$, and calculates the ciphertext $C_2 = (g^r, m \cdot e(g_A, g^{sx_A})^r)$, where the encryption result $C_2$ that is encrypted by the ciphertext sending end 10 by using its own public key and is expected to fail to be sent by the proxy to others for decryption is briefly marked as $CBE_A(m)$.

The $e$(parameter 1, parameter 2) is a bilinear mapping function on the elliptic curve, and a specific calculation may be finished by using a Miller algorithm.

A process of calculating the proxy key by the ciphertext sending end 10 is: randomly selecting an element $x$ in the cyclic group $G_2$ with prime order and calculating the proxy key: $rk_{A-B} = \left( g_A^{-sx_A} \cdot H_2^t(x), CBE_B(x) \right)$, where the $CBE_B(x)$ is a result obtained by encrypting the element $x$ by using the public key of the ciphertext receiving end 20. For the ciphertext $C_1$, the ciphertext receiving end 20 re-encrypts the ciphertext by using the proxy key $rk_{A-B}$ and calculates

$$C' = m \cdot e\left(g_A, g^{sx_A}\right)^r \cdot e\left(g_A^{-sx_A} \cdot H_2^t(x), g^r\right) = m \cdot e\left(H_2^t(x), g^r\right)$$ to obtain a re-encrypted ciphertext, that is, a ciphertext $C_3$ encrypted by using the public key of the ciphertext receiving end, where $C_3 = (g^{tr}, c', CBE_B(x))$.

In this embodiment, a defect that a message encrypted by a local end may be randomly decrypted because of collusion of a receiving end and a proxy can be avoided, and therefore not only a message encrypted by a user is securer, but also the receiving end can perform a re-encryption operation according to demands, so that the ciphertext of the message can be more flexibly processed.

Referring to FIG. 2, it is a schematic structural diagram of another ciphertext processing system according to an embodiment of the present invention. The system in this embodiment includes: a ciphertext sending end 10, a ciphertext receiving end 20, a proxy 40, and a key generating mechanism 30. The key generating mechanism 30 is a key generating and releasing server, and the proxy 40 is connected to the ciphertext receiving end 10 and the ciphertext sending end 20, and is a server capable of performing re-encryption and ciphertext forwarding.

The key generating mechanism 30 is configured to release a system public parameter and partial private keys corresponding to the ciphertext sending end and the ciphertext receiving end;

the ciphertext receiving end 20 is configured to calculate its own public key according to a random secret value selected by the ciphertext receiving end 20 and the system public parameter, and publicize the public key;

the ciphertext sending end 10 is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end, and send the proxy key to the proxy;

the proxy 40 is configured to receive the proxy key sent by the ciphertext sending end 10, perform, according to the proxy key, a re-encryption operation on a ciphertext sent by the ciphertext sending end 10, convert the ciphertext to a ciphertext encrypted by using the public key of the ciphertext receiving end 20, and send the converted ciphertext to the ciphertext receiving end 20; and

the ciphertext receiving end 20 is further configured to decrypt the converted ciphertext.

In the case of having the proxy 40, a manner for the key generating mechanism 30 to generate and release the system public parameter and the partial private keys, a manner for the ciphertext receiving end 10 and the ciphertext sending end 20 to generate respective private keys and the public keys, a manner for the ciphertext sending end to generate the proxy key, an encrypting manner, and the re-encryption operation are the same as the generating manners in the first system embodiment. In this embodiment, the re-encryption operation is performed by the proxy 40, the ciphertext sent by the ciphertext sending end 10 is converted to the ciphertext encrypted by using the public key of the ciphertext receiving end 20, and the converted ciphertext is sent to the ciphertext receiving end 20. The ciphertext receiving end 20 directly decrypts the converted ciphertext according to the self private key to obtain a plaintext of a message.

In this embodiment, a defect that a message encrypted by a local end may be randomly decrypted because of collusion of a receiving end and a proxy can be avoided, and therefore a message encrypted by a user is securer.

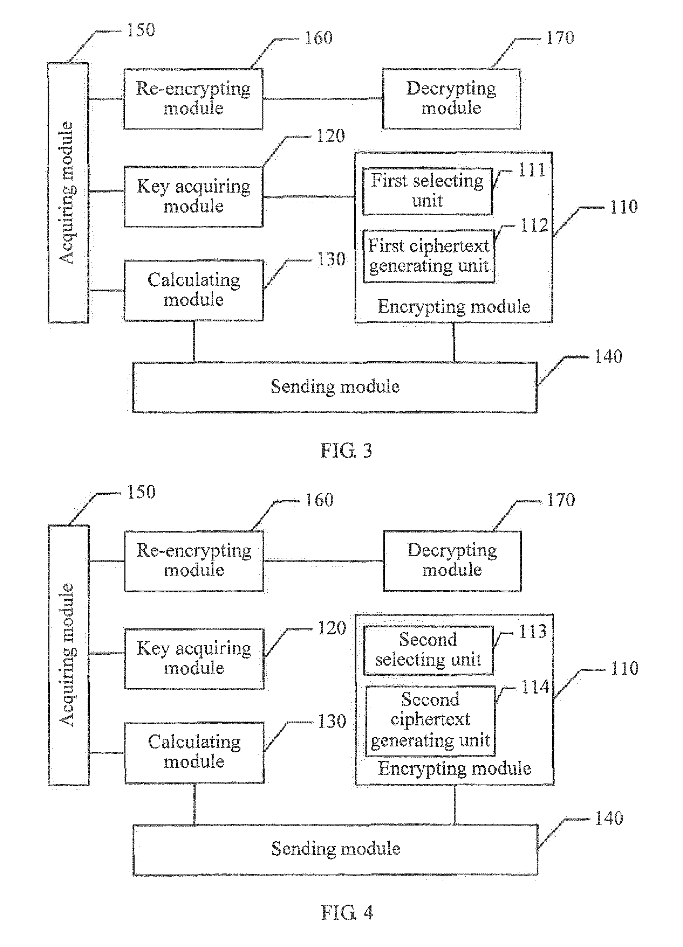

Referring to FIG. 3, it is a schematic structural diagram of a first embodiment of a ciphertext processing apparatus according to the present invention. The ciphertext processing apparatus may be used as the ciphertext sending end 10 and the ciphertext receiving end 20 in the preceding system embodiment, and specifically, the ciphertext processing apparatus includes: an encrypting module 110, a key acquiring module 120, a calculating module 130, and a sending module 140.

The encrypting module 110 is configured to encrypt a message to obtain a ciphertext.

The key acquiring module 120 is configured to calculate a private key of a local end according to a random secret value selected by the local end and a partial private key acquired by the local end, and calculate a public key of the local end according to the random secret value and a system public parameter.

The calculating module 130 is configured to calculate a proxy key according to the private key calculated by the key acquiring module 120 and a public key publicized by a ciphertext receiving end, where the public key publicized by the ciphertext receiving end is calculated by the ciphertext receiving end according to a random secret value selected by the ciphertext receiving end and the system public parameter.

The sending module 140 is configured to send the proxy key calculated by the calculating module 130 and the ciphertext encrypted by the encrypting module 110, so that the ciphertext receiving end acquires a ciphertext obtained after a re-encryption operation is performed, according to the proxy key, on the ciphertext sent by the ciphertext sending end.

After receiving the system public parameter and the partial private key of the local end, the key acquiring module 120 may randomly select the random secret value to calculate the private key and the public key of the local end.

The system public parameter and the partial private key of the local end may be released by the key generating mechanism, and the system public parameter released by the key generating mechanism includes: two preset cyclic groups $G_1$ and $G_2$ with prime order, two preset hash functions $H_1$ and $H_2$ , and a basic parameter $g^s$ calculated according to the $G_1$, the $G_2$, the $H_1$, the $H_2$, and an integer randomly selected by the key generating mechanism.

The local end is marked as a user A end, and the key generating mechanism calculates $g_A$ by adopting a formula: $g_A = H_1(id_A)$ and then sends $g^s_A$ to the local end as a partial private key of the local end.

The key acquiring module 120 may first randomly select integers $x_A$ and $t$ as the random secret value, then calculate the public key $pk_A$ of the local end according to a formula $pk_A = (g^{sx_A}, g^t)$, and calculate the private key $sk_A$ of the local end according to a formula $sk_A = g_A^{sx_A}$.

After the public key $pk_A$ and the private key $sk_A$ of the local end are obtained, if the local end serving as a sending end needs to send a ciphertext to another ciphertext device, that is, the ciphertext receiving end (marked as user B), the calculating module 130 calculates the proxy key according to the private key $sk_A$ and the public key publicized by an opposite party. A specific calculation manner may be that:

the calculating module 130 randomly selects an element $x$ in the cyclic group $G_2$ with prime order and calculates a proxy key: $rk_{A-B} = \left( g_A^{-sx_A} \cdot H_2^t(x), CBE_B(x) \right)$, where the $CBE_B(x)$ is a result obtained by encrypting the element $x$ by using the public key of the ciphertext receiving end.

The sending module 140 sends the proxy key $rk_{A-B}$ to the ciphertext receiving end and sends the ciphertext obtained by the encrypting module 110 to the ciphertext receiving end. The ciphertext receiving end re-encrypts the ciphertext and decrypts the re-encrypted ciphertext to obtain the plaintext of the message. Alternatively, in the case of having forwarding of the proxy, the sending module 140 sends the proxy key to the proxy and sends the ciphertext obtained by the encrypting module 110 to the proxy, the proxy re-encrypts the ciphertext and sends the re-encrypted ciphertext to the ciphertext receiving end, and the ciphertext receiving end performs decryption to obtain the plaintext of the message.

Further, as shown in FIG. 3, the ciphertext processing apparatus may further include: an acquiring module 150.

The acquiring module 150 is configured to acquire the system public parameter and the partial private key released by the key generating mechanism, and randomly select the random secret value. The acquiring module 150 is connected to the key acquiring module 120. That is, the acquiring module 150 is configured to acquire the basic parameter $g^s$, the cyclic groups $G_1$ and $G_2$ with prime order, and two hash functions $H_1$ and $H_2$ that are released by the key generating mechanism.

Further, as shown in FIG. 3, the encrypting module 110 of the ciphertext processing apparatus may further specifically include:

a first selecting unit 111, configured to randomly select an integer as an encryption parameter; and
a first ciphertext generating unit 112, configured to perform, according to the encryption parameter and its own public key, an encryption calculation on a message to be encrypted to obtain the ciphertext.

Specifically, encrypting, by the encrypting module 110, the message through the first selecting unit 111 and the first ciphertext generating unit 112 includes the following two manners:

if it is expected that a ciphertext obtained by encrypting $m$ can be sent by a proxy to others for decryption, the first selecting unit 111 randomly selects an integer $r$, and the first ciphertext generating unit 112 calculates the ciphertext $C_1 = (g^{tr}, g^r, m \cdot e(g_A, g^{sxA})^r)$; and
if it is expected that a ciphertext obtained by encrypting $m$ cannot be sent by a proxy to others for decryption, the first selecting unit 111 randomly selects an integer $r$, and the first ciphertext generating unit 112 calculates the ciphertext $C_2 = (g^r, m \cdot e(g_A, g^{sxA})^r)$, where the encryption result $C_2$ that is obtained by the local end by encrypting the message m using its own public key and is expected to fail to be sent by the proxy to others for decryption is briefly marked as $CBE_A(m)$.

For the ciphertext $C_1$, the ciphertext receiving end or the proxy re-encrypts the ciphertext by using the proxy key $rk_{A-B}$ and calculates $C' = m \cdot e\left(g_A, g^{sx_A}\right)^r \cdot e\left(g_A^{-sx_A} \cdot H_2^t(x), g^r\right) = m \cdot e\left(H_2^t(x), g^r\right)$ to obtain a re-encrypted ciphertext, that is, a ciphertext $C_3$ encrypted by using the public key of the ciphertext receiving end, where $C_3 = (g^{tr}, C', CBE_B(x))$.

Further, as shown in FIG. 3, the ciphertext processing apparatus further includes: a re-encrypting module 160 and a decrypting module 170. The ciphertext processing apparatus processes the ciphertext sent by the ciphertext sending end through the two modules.

The acquiring module 150 is further configured to receive the ciphertext and the proxy key.

The re-encrypting module 160 is configured to perform, according to the proxy key received by the acquiring module 150, a re-encryption operation on the ciphertext received by the acquiring module 150, and convert the ciphertext to a ciphertext encrypted by using the public key of the local end.

The decrypting module 170 is configured to decrypt, according to the private key of the local end, the ciphertext encrypted by using the public key of the local end and converted by the re-encrypting module 160.

A defect that a message encrypted by a local end may be randomly decrypted because of collusion of a receiving end and a proxy can be avoided by selecting a proxy key with a special structure, and therefore not only a message encrypted by a user is securer, but also the receiving end can perform a re-encryption operation according to demands, so that the ciphertext of the message can be more flexibly processed.

Referring to FIG. 4, it is a schematic structural diagram of a second embodiment of a ciphertext processing apparatus according to the present invention. The ciphertext processing apparatus in this embodiment includes: an encrypting module 110, a key acquiring module 120, a calculating module 130, a sending module 140, an acquiring module 150, a re-encrypting module 160, and a decrypting module 170.

In addition to a basic parameter $g^s$, cyclic groups $G_1$ and $G_2$ with prime order, and two hash functions $H_1$ and $H_2$ that are released by a key generating mechanism, the acquiring module 150 further needs to acquire a hash function $H_3$ released by the key generating mechanism.

The key acquiring module 120 still calculates a public key $pk_A = (g^{sxA}, g^t)$ and a private key $sk_A = g_A^{sx_A}$ according to the $g^s$ and a partial private key $g_A = H_1(id_A)$ that are sent by the key generating mechanism.

The calculating module 130 still randomly selects an element $x$ in the cyclic group $G_2$ with prime order and calculates a proxy key: $rk_{A-B} = \left(g_A^{-sx_A} \cdot H_2^t(x), CBE_B(x)\right)$, where the $CBE_B(x)$ is a result obtained by encrypting the element $x$ by using a public key of a ciphertext receiving end.

Encrypting, by the encrypting module 110, a message to be encrypted through the second selecting unit 113 and the second ciphertext generating unit 114 specifically is as follows:

If it is expected that a ciphertext obtained by encrypting $m$ can be sent by a proxy to others for decryption, the second selecting unit 113 randomly selects an element $\sigma$ in the cyclic group $G_2$ with prime order as an encryption parameter, and the second ciphertext generating unit 114 calculates $r=H_3(m,\sigma)$ and then calculates a ciphertext $C_4 = (g^{tr},g^r,\sigma \cdot e(g_A,g^{sxA})^r,\sigma \cdot m)$; and

if it is expected that a ciphertext obtained by encrypting $m$ cannot be sent by a proxy to others for decryption, the second selecting unit 113 randomly selects an element $\sigma$ in the cyclic group $G_2$ with prime order as an encryption parameter, and the second ciphertext generating unit 114 calculates $r=H_3(m,\sigma)$ and then calculates a ciphertext $C_5 = (g^r,\sigma \cdot e(g_A,g^{sxA})^r,\sigma \cdot m)$, where the $C_5$ is marked as $CBE_A(m)$.

Therefore, a re-encryption operation on the $C_4$ performed by the re-encrypting module 160 according to $rk_{A-B}$

is: calculating: $C^{'} = \sigma \cdot e\left(g_A, g^{sx_A}\right)^r \cdot e\left(g^{-sx_A}H_2^t(x), g^r\right) = \sigma \cdot e\left(H_2^t(x), g^r\right)$ , and a re-encrypted ciphertext is:

$C_6=(g^{tr},C',\sigma \cdot m,CBE'_B(x))$.

A defect that a message encrypted by a local end may be randomly decrypted because of collusion of a receiving end and a proxy can be avoided by selecting a random secret value to calculate a public key and a private key, and therefore not only a message encrypted by a user is securer, but also the receiving end can perform a re-encryption operation according to demands, so that the ciphertext of the message can be more flexibly processed.

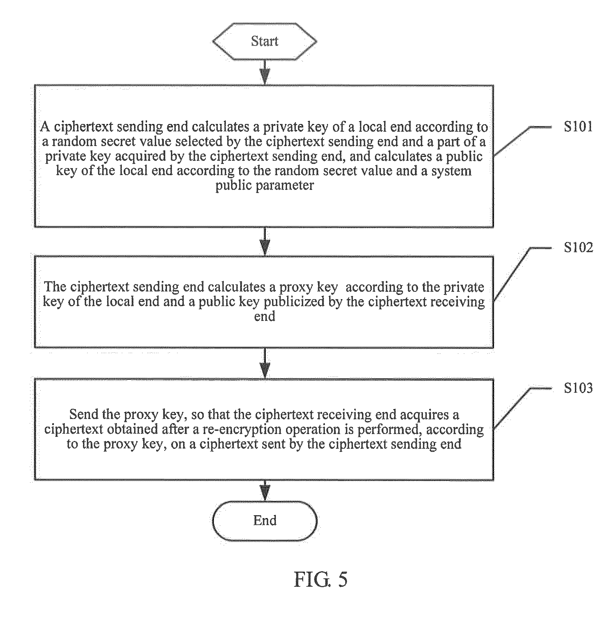

A ciphertext processing method of the present invention is described in detail in the following. Referring to FIG. 5, it is a schematic flowchart of a first embodiment of a ciphertext processing method according to the present invention, where a ciphertext sending end is marked as user A, and a ciphertext receiving end is marked as user B. The ciphertext processing method includes: S101: The ciphertext sending end calculates a private key of a local end according to a random secret value selected by the ciphertext sending end and a partial private key acquired by the ciphertext sending end, and calculates a public key of the local end according to the random secret value and a system public parameter.

The ciphertext sending end may acquire the partial private key of the local end and the system public parameter from a key generating mechanism by using an existing manner.

A process in which the key generating mechanism generates the system public parameter and the partial private key of the ciphertext sending end may be as follows:

The key generating mechanism generates the system public parameter: preset cyclic groups $G_1$ and $G_2$ with prime order and obtains a bilinear mapping e:$G_1 \times G_1 \rightarrow G_2$ where the $G_1$ is a point group on an elliptic curve, the $G_2$ is a multiplicative group on a finite domain; operations on the $G_1$ and the $G_2$ are represented as "multiplication" operations, a specific operation rule is performed according to operation rules on the elliptic curve and the finite domain; and a generating element $g$ in the $G_1$ is randomly selected, and hash functions $H_1:\{0.1\}^* \rightarrow G_1$ and $H_2: G_2 \rightarrow G_1$ are selected, where a calculation process of the two hash functions is that: for $H_1$, an input 0 and 1 string with a random length is used as an integer $i$, and $g^i$ is calculated as an output, and for $H_2$, any element on the input $G_2$ is used as an integer $i$, and $g^i$ is calculated as an output; and the key generating mechanism randomly selects an integer $s$ as its own main secret and calculates $g^s$ as a basic parameter. The key generating mechanism releases the preset cyclic groups $G_1$ and $G_2$ with prime order, the $g$, the two hash functions $H_1$ and $H_2$, and the basic parameter $g^s$ as the public parameters. It may be understood that the hash functions $H_1$ and $H_2$ herein are only one of selected hash function combinations, and during specific implementation, other specific hash functions may also be used.

For the ciphertext sending end, the key generating mechanism calculates $g_A$ by adopting a formula: $g_A=H_1(id_A)$, where the $id_A$ is an identity of the ciphertext sending end 10, for example, an e-mail address. Then, $g^s_A$ is sent to the ciphertext sending end as a partial private key of the ciphertext sending end.

After receiving the partial private key and the system public parameter, the ciphertext sending end may first randomly select integers $x_A$ and $t$ as the random secret value and then calculate the public key $pk_A$ of the local end according to a formula $pk_A = (g^{sxA},g^t)$, where the $t^{th}$ power of g represents that t pieces of gs are "multiplied", and a specific multiplication operation rule is performed according to an operation rule on the point group of the elliptic curve.

The private key $sk_A$ of the local end is calculated according to a formula $sk_A = g_A^{sx_A}$.

When it is necessary to send a ciphertext to a certain ciphertext receiving end, S102 is performed.

S102: The ciphertext sending end calculates a proxy key according to the private key of the local end and a public key publicized by the ciphertext receiving end, where the public key publicized by the ciphertext receiving end is calculated by the ciphertext receiving end according to a random secret value selected by the ciphertext receiving end and the system public parameter. Generation of the public key and the private key of the ciphertext receiving end is the same as that of the ciphertext sending end in S101.

After acquiring the public key $pk_A$ and the private key $sk_A$ of the local end, the ciphertext sending module calculates the proxy key according to the private key $sk_{local}$ and the public key publicized by an opposite party. A specific calculation manner may be as follows:

In S 102, an element $x$ in the cyclic group $G_2$ with prime order released by the key generating mechanism is randomly selected, and the proxy key: $rk_{A-B} = \left( g_A^{-sx_A} \cdot H_2^t(x), CBE_B(x) \right)$ is calculated, where the $CBE_B(x)$ is a result obtained by encrypting the element $x$ by using the public key of the ciphertext receiving end.

S103: Send the proxy key, so that the ciphertext receiving end acquires a ciphertext obtained after a re-encryption operation is performed, according to the proxy key, on a ciphertext sent by the ciphertext sending end.

In S103, the proxy key may be sent to the ciphertext receiving end, and the ciphertext receiving end performs the re-encryption operation on the ciphertext sent by the ciphertext sending end, so that the ciphertext receiving end acquires the ciphertext encrypted by using the public key of the ciphertext receiving end to finish decryption to obtain a plaintext of a message.

If the ciphertext sending end and the ciphertext receiving end forward the ciphertext through the proxy, in S103, the proxy key may be sent to the proxy, and the proxy performs the re-encryption operation on the ciphertext sent by the ciphertext sending end and sends the ciphertext after the re-encryption operation is performed, according to the proxy key, on the ciphertext sent by the ciphertext sending end to the ciphertext receiving end, so that the ciphertext receiving end acquires the ciphertext encrypted by using the public key of the ciphertext receiving end to finish the decryption to obtain the plaintext of the message. Encrypting, by the ciphertext sending end, a message to be encrypted, and generating and sending a ciphertext may specifically include that: the ciphertext sending end randomly selects an integer as an encryption parameter; and the ciphertext sending end performs, according to the encryption parameter and its own public key, an encryption calculation on the message to be encrypted to obtain a ciphertext.

Alternatively, encrypting, by the ciphertext sending end, a message to be encrypted, and generating and sending a ciphertext includes that: the ciphertext sending end randomly selects an element in the $G_2$ as an encryption parameter; and the ciphertext sending end performs, according to the encryption parameter and its own public key, an encryption calculation on the message to be encrypted to obtain a ciphertext.

A defect that a message encrypted by a local end may be randomly decrypted because of collusion of a receiving end and a proxy can be avoided by selecting a proxy key with a special structure, and therefore not only a message encrypted by a user is securer, but also the receiving end can perform a re-encryption operation according to demands, so that the ciphertext of the message can be more flexibly processed.

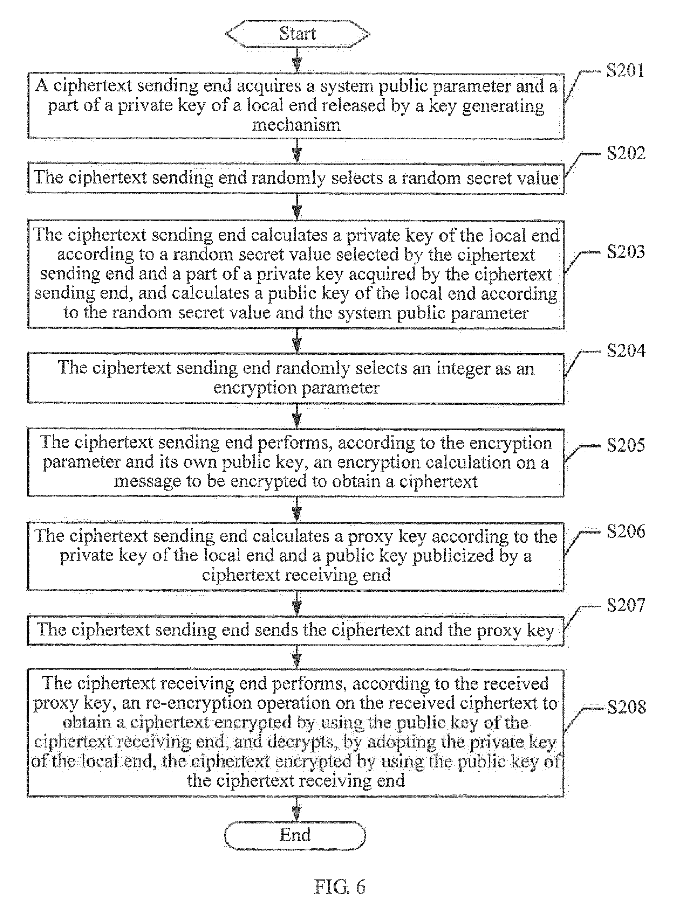

Referring to FIG. 6, it is a schematic flowchart of a second embodiment of a ciphertext processing method according to the present invention. In this embodiment, a ciphertext sending end is marked as user A, and a ciphertext receiving end is marked as user B. The ciphertext processing method includes:

S201: The ciphertext sending end acquires a system public parameter and a partial private key of a local end released by a key generating mechanism.

Specifically, the system public parameter released by the key generating mechanism include: two preset cyclic groups $G_1$ and $G_2$ with prime order, two preset hash functions $H_1$ and $H_2$, and a basic parameter calculated according to the $G_1$, the $G_2$, the $H_1$, the $H_2$, and an integer randomly selected by the key generating mechanism.

For the ciphertext sending end, the key generating mechanism calculates $g_A$ by adopting a formula: $g_A = H_1(id_A)$, where the $id_A$ is an identity of the ciphertext sending end, for example, an e-mail address. Then, $g_A^s$ is sent to the ciphertext sending end as a partial private key of the ciphertext sending end.

S202: The ciphertext sending end randomly selects a random secret value.

S203: The ciphertext sending end calculates a private key of the local end according to the random secret value selected by the ciphertext sending end and the partial private key acquired by the ciphertext sending end, and calculates a public key of the local end according to the random secret value and the system public parameter.

Specifically, after receiving the partial private key, in S202, the ciphertext sending end may first randomly select integers $x_A$ and $t$ as the random secret value, and then in S203, a formula for acquiring the public key $pk_A$ according to the selected $x_A$ may be: $pk_A = (g^{sx_A}, g^t)$, where the $t$th power of g represents that t pieces of gs are "multiplied", and a specific multiply operation rule is performed according to an operation rule on the point group of the elliptic curve. A formula for calculating the private key $sk_A$ of the ciphertext sending end according to the selected $x_A$ and the $g_A^s$ may be: $sk_A = g_A^{sx_A}$.

When user A expects to send a ciphertext to the ciphertext receiving end of user B through the ciphertext sending end, S204 is performed.

S204: The ciphertext sending end randomly selects an integer as an encryption parameter.

S205: The ciphertext sending end performs, according to the encryption parameter and its own public key, an encryption calculation on a message to be encrypted to obtain a ciphertext. Specifically, if it is expected that the ciphertext obtained by encryption can be sent by a proxy to others for decryption, the ciphertext sending end randomly selects an integer $r$ in S204, and calculates the ciphertext $C_1 = (g^{tr}, g^r, m \cdot e(g_A, g^{sx_A})^r)$ in S205; and

if it is expected that the ciphertext obtained by encryption cannot be sent by a proxy to others for decryption, the ciphertext sending end randomly selects an integer $r$ in S204, and calculates the ciphertext $C_2 = (g^r, m \cdot e(g_A, g^{sx_A})^r)$ in S205, where the encryption result $C_2$ that is encrypted by the ciphertext sending end by using its own public key and is expected to fail to be sent by the proxy to others for decryption is briefly marked as $CBE_A(m)$.

The $e$(parameter 1, parameter 2) is a bilinear mapping function on the elliptic curve, and a specific calculation may be finished by using a Miller algorithm.

S206: The ciphertext sending end calculates a proxy key according to the private key of the local end and a public key publicized by the ciphertext receiving end.

In S206, an element $x$ in the cyclic group $G_2$ with prime order is randomly selected, and the proxy key:

$$rk_{A-B} = \left( g_A^{-sx_A} \cdot H_2'(x), CBE_B(x) \right)$$ is calculated, where the $CBE_B(x)$ is a result obtained by encrypting the element

$x$ by using the public key of the ciphertext receiving end. S207: The ciphertext sending end sends the ciphertext and the proxy key. In this embodiment, in S207, the ciphertext obtained in S205 and the proxy key obtained in S206 are directly sent to the ciphertext receiving end.

S208: The ciphertext receiving end performs, according to the received proxy key, a re-encryption operation on the received ciphertext to obtain a ciphertext encrypted by using the public key of the ciphertext receiving end, and decrypts, by adopting the private key of the local end, the ciphertext encrypted by using the public key of the ciphertext receiving end.

Specifically, for example, for the ciphertext $C_1$, the ciphertext receiving end re-encrypts the ciphertext by using the proxy key $rk_{A-B}$ and calculates $C' = m \cdot e\left(g_A, g^{sx_A}\right)^r \cdot e\left(g_A^{-sx_A} \cdot H_2'(x), g^r\right) = m \cdot e\left(H_2'(x), g^r\right)$ to obtain the re-encrypted ciphertext, that is, the ciphertext $C_3$ encrypted by using the public key of the ciphertext receiving end, where $C_3 = (g^{tr}, C', CBE_B(x))$.

The ciphertext receiving end may finish decrypting the ciphertext $C_3$ by adopting its own private key.

It should be noted that in other embodiments, a ciphertext sending end may send a ciphertext and a proxy key to a proxy, the proxy performs a re-encryption operation and sends a result of the re-encryption operation to a ciphertext receiving end, and the ciphertext receiving end performs decryption according to its own private key.

A defect that a message encrypted by a local end may be randomly decrypted because of collusion of a receiving end and a proxy can be avoided by selecting a random secret value to calculate a public key and a private key, and therefore not only a message encrypted by a user is securer, but also the receiving end can perform a re-encryption operation according to demands, so that the ciphertext of the message can be more flexibly processed.

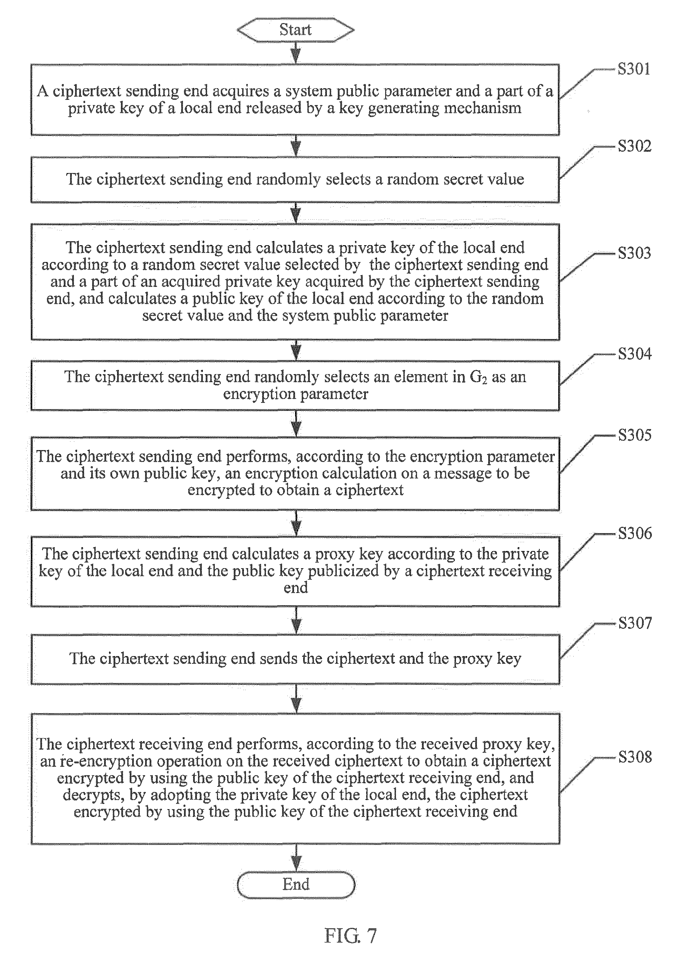

Referring to FIG. 7, it is a schematic flowchart of a third embodiment of a ciphertext processing method according to the present invention. In this embodiment, user A and user B are included. The ciphertext processing method includes:

S301: A ciphertext sending end acquires a system public parameter and a partial private key of a local end released by a key generating mechanism.

Specifically, the system public parameter released by the key generating mechanism include: two preset cyclic groups $G_1$ and $G_2$ with prime order, two preset hash functions $H_1$ and $H_2$, and a basic parameter calculated according to the $G_1$, the $G_2$, the $H_1$, the $H_2$, and an integer randomly selected by the key generating mechanism.

For the ciphertext sending end, the key generating mechanism may calculate $g_A$ by adopting a formula: $g_A = H_1 (id_A)$. Then, $g_A$ is sent to the ciphertext sending end as a partial private key of the ciphertext sending end.

S302: The ciphertext sending end randomly selects a random secret value.

S303: The ciphertext sending end calculates a private key of the local end according to the random secret value selected by the ciphertext sending end and the partial private key acquired by the ciphertext sending end, and calculates a public key of the local end according to the random secret value and the system public parameter.

Specifically, after receiving the partial private key, in S302, the ciphertext sending end may first randomly select integers $x_A$ and $t$ as the random secret value, and then in S303, a formula for acquiring the public key $pk_A$ according to the selected $x_A$ may $pk_A = (g^{sx_A}, g^t)$, and a formula for calculating the private key $sk_A$ of the ciphertext sending end according to the selected $x_A$ and the $g^s_A$ may be: $sk_A = g_A^{sx_A}$.

When user A expects to send a ciphertext to the ciphertext receiving end of user B through the ciphertext sending end, S304 is performed.

S304: The ciphertext sending end randomly selects an integer in $G_2$ as an encryption parameter.

S305: The ciphertext sending end performs, according to the encryption parameter and its own public key, an encryption calculation on a message to be encrypted to obtain a ciphertext.

Specifically, if it is expected that the ciphertext obtained by encryption can be sent by a proxy to others for decryption, when a message $m$ is encrypted, an element $\sigma$ is selected in the cyclic group $G_2$ with prime order as an encryption parameter in S304, $r=H_3(m,\sigma)$ is calculated in S305, and then the ciphertext $C_4 = (g^{tr}, g^r, \sigma \cdot e(g_A, g^{sxA})^r, \sigma \cdot m)$ is calculated; and

if it is expected that the ciphertext obtained by encryption cannot be sent by a proxy to others for decryption, when a message $m$ is encrypted, an element $\sigma$ is selected in the cyclic group $G_2$ with prime order as an encryption parameter in S304, $r=H_3(m,\sigma)$ is calculated in S305, and then the ciphertext $C_5 = (g^r, \sigma \cdot e(g_A, g^{sxA})^r, \sigma \cdot m)$ is calculated, where the $C_5$ is marked as $CBE_A(m)$. S306: The ciphertext sending end calculates a proxy key according to the private key of the local end and a public key publicized by the ciphertext receiving end.

In S306, an element $x$ in the cyclic group $G_2$ with prime order is randomly selected, and the proxy key:

$$rk_{A-B} = \left( g_A^{-sx_A} \cdot H_2^t(x), CBE_B(x) \right)$$ is calculated, where the $CBE_B(x)$ is a result obtained by encrypting the element $x$ by using the public key of the ciphertext receiving end 20.

S307: The ciphertext sending end sends the ciphertext and the proxy key. In this embodiment, in S307, the ciphertext obtained in S305 and the proxy key obtained in S306 are directly sent to the ciphertext receiving end.

S308: The ciphertext receiving end performs, according to the received proxy key, a re-encryption operation on the received ciphertext to obtain a ciphertext encrypted by using the public key of the ciphertext receiving end, and decrypts, by adopting the private key of the local end, the ciphertext encrypted by using the public key of the ciphertext receiving end.

Specifically, for example, for the ciphertext $C_3$, the ciphertext receiving end re-encrypts the ciphertext by using the proxy key $rk_{A-B}$ and calculates $C' = \sigma \cdot e\left(g_A, g^{sx_A}\right)^r \cdot e\left(g^{-sx_A} H_2^t(x), g^r\right) = \sigma \cdot e\left(H_2^t(x), g^r\right)$, and the re-encrypted ciphertext is $C_6=(g^{tr}, c', \sigma \cdot m, CBE_B(x))$.

The ciphertext receiving end may finish decrypting the ciphertext $C_6$ by adopting its own private key.

It should be noted that in other embodiments, a ciphertext sending end may send a ciphertext and a proxy key to a proxy, the proxy performs a re-encryption operation and sends a result of the re-encryption operation to a ciphertext receiving end, and the ciphertext receiving end performs decryption according to its own private key.

A defect that a message encrypted by a local end may be randomly decrypted because of collusion of a receiving end and a proxy can be avoided by selecting a random secret value to calculate a public key and a private key, and therefore not only a message encrypted by a user is securer, but also the receiving end can perform a re-encryption operation according to demands, so that the ciphertext of the message can be more flexibly processed.

Persons of ordinary skill in the art should understand that that all of or a part of processes in the methods according to the embodiments may be implemented by a computer program instructing relevant hardware. The program may be stored in a computer readable storage medium. When the program is performed, the processes of the method according to the embodiments of the present invention are performed. The storage medium may be a magnetic disk, an optical disk, a read-only memory (Read-Only Memory, ROM) or a random access memory (Random Access Memory, RAM).

The foregoing disclosed descriptions are merely exemplary embodiments of the present invention. However, the protection scope of the present invention is not limited thereto. Therefore, equivalent variations made according to the claims of the present invention shall fall within the protection scope of the present invention.

**Claims**

**1.** A ciphertext processing method, comprising:

calculating, by a ciphertext sending end, a private key of a local end according to a random secret value selected by the ciphertext sending end and a partial private key acquired by the ciphertext sending end, and calculating a public key of the local end according to the random secret value and a system public parameter;

calculating a proxy key according to the private key of the local end and a public key publicized by a ciphertext receiving end, wherein the public key publicized by the ciphertext receiving end is calculated by the ciphertext receiving end according to a random secret value selected by the ciphertext receiving end and the system public parameter; and

sending the proxy key, so that the ciphertext receiving end acquires a ciphertext obtained after a re-encryption operation is performed, according to the proxy key, on a ciphertext sent by the ciphertext sending end.

2. The method according to claim 1, before the calculating, by a ciphertext sending end, a private key of a local end according to a random secret value selected by the ciphertext sending end and a partial private key acquired by the ciphertext sending end, and calculating a public key of the local end according to the random secret value and a system public parameter, further comprising:

acquiring, by the ciphertext sending end, the system public parameter and the partial private key of the local end released by a key generating mechanism, wherein the system public parameter released by the key generating mechanism comprises: two preset cyclic groups $G_1$ and $G_2$ with prime order, a generating element $g$ of the $G_1$, two preset hash functions $H_1$ and $H_2$, and a basic parameter calculated according to the $G_1$, the $G_2$, the $g$, the $H_1$, the $H_2$, and an integer randomly selected by the key generating mechanism; and randomly selecting, by the ciphertext sending end, the random secret value.

3. The method according to claim 1 or 2, further comprising:

encrypting, by the ciphertext sending end, a message to be encrypted, and generating and sending the ciphertext, wherein this step comprises:

randomly selecting, by the ciphertext sending end, an integer as an encryption parameter; and
performing, by the ciphertext sending end according to the encryption parameter and its own public key, an encryption calculation on the message to be encrypted to obtain the ciphertext.

4. The method according to claim 2, further comprising:

the encrypting, by the ciphertext sending end, a message to be encrypted, and generating and sending the ciphertext, wherein this step comprises:

randomly selecting, by the ciphertext sending end, an element in the $G_2$ as an encryption parameter; and
performing, by the ciphertext sending end according to the encryption parameter and its own public key, an encryption calculation on the message to be encrypted to obtain the ciphertext.

5. The method according to any one of claims 1 to 4, wherein the sending the proxy key, so that the ciphertext receiving end acquires a ciphertext obtained after a re-encryption operation is performed, according to the proxy key, on a ciphertext sent by the ciphertext sending end comprises:

sending, by the ciphertext sending end, the proxy key to the ciphertext receiving end, so that the ciphertext receiving end performs, according to the proxy key, the re-encryption operation on the ciphertext generated and sent by the ciphertext sending end, to acquire a ciphertext encrypted by using the public key of the ciphertext receiving end, and decrypts the acquired ciphertext encrypted by using the public key of the ciphertext receiving end.

6. The method according to any one of claims 1 to 4, wherein the sending the proxy key, so that the ciphertext receiving end acquires a ciphertext obtained after a re-encryption operation is performed, according to the proxy key, on a ciphertext sent by the ciphertext sending end comprises:

sending, by the ciphertext sending end, the proxy key to a proxy, so that the proxy performs, according to the proxy key, the re-encryption operation on the ciphertext generated and sent by the ciphertext sending end to acquire the ciphertext encrypted by using the public key of the ciphertext receiving end, and sends the acquired ciphertext encrypted by using the public key of the ciphertext receiving end to the ciphertext receiving end, and the ciphertext receiving end decrypts the converted ciphertext, wherein
the proxy is separately connected to the ciphertext sending end and the ciphertext receiving end and is configured to perform the re-encryption operation on the ciphertext and forward a re-encryption result.

7. A ciphertext processing apparatus, comprising:

an encrypting module, configured to encrypt a message to obtain a ciphertext;

a key acquiring module, configured to calculate a private key of a local end according to a random secret value selected by the local end and a partial private key acquired by the local end, and calculate a public key of the local end according to the random secret value and a system public parameter;

a calculating module, configured to calculate a proxy key according to the private key calculated by the key acquiring module and a public key publicized by a ciphertext receiving end, wherein the public key publicized by the ciphertext receiving end is calculated by the ciphertext receiving end according to a random secret value selected by the ciphertext receiving end and the system public parameter; and

a sending module, configured to send the proxy key calculated by the calculating module and the ciphertext encrypted by the encrypting module, so that the ciphertext receiving end acquires a ciphertext obtained after a re-encryption operation is performed, according to the proxy key, on the ciphertext sent by the ciphertext sending end.

8. The apparatus according to claim 7, further comprising:

an acquiring module, configured to acquire the system public parameter and the partial private key of the local end released by a key generating mechanism, and randomly select the random secret value, wherein

the system public parameter released by the key generating mechanism comprises: two preset cyclic groups $G_1$ and $G_2$ with prime order, a generating element $g$ of the $G_1$, two preset hash functions $H_1$ and $H_2$, and a basic parameter calculated according to the $G_1$, the $G_2$, the $g$, the $H_1$, the $H_2$, and an integer randomly selected by the key generating mechanism.

9. The apparatus according to claim 7 or 8, wherein the encrypting module comprises:

a first selecting unit, configured to randomly select an integer as an encryption parameter; and

a first ciphertext generating unit, configured to perform, according to the encryption parameter and its own public key, an encryption calculation on a message to be encrypted to obtain the ciphertext.

10. The apparatus according to claim 8, wherein the encrypting module comprises:

a second selecting unit, configured to randomly select an element in the $G_2$ as an encryption parameter; and
a second ciphertext generating unit, configured to perform, according to the encryption parameter and its own public key, the encryption calculation on the message to be encrypted to obtain the ciphertext.

11. The apparatus according to any one of claims 7 to 10, wherein:

the acquiring module is further configured to receive the ciphertext and the proxy key; and
the apparatus further comprises:

a re-encrypting module, configured to perform, according to the proxy key received by a receiving module, a re-encryption operation, on the ciphertext received by the receiving module, and convert the ciphertext to a ciphertext encrypted by using the public key of the local end; and
a decrypting module, configured to decrypt, according to the private key of the local end, the ciphertext encrypted by using the public key of the local end and converted by the re-encrypting module.

12. A ciphertext processing system, comprising a ciphertext sending end, a ciphertext receiving end, and a key generating mechanism, wherein:

the key generating mechanism is configured to release a system public parameter and partial private keys corresponding to the ciphertext sending end and the ciphertext receiving end;
the ciphertext receiving end is configured to calculate its own public key according to a random secret value selected by the ciphertext receiving end and the system public parameter, and publicize the public key;
the ciphertext sending end is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end, and send the proxy key to the ciphertext receiving end; and
the ciphertext receiving end is further configured to receive the proxy key sent by the ciphertext sending end, perform, according to the proxy key, a re-encryption operation on a ciphertext sent by the ciphertext sending end, convert the ciphertext to a ciphertext encrypted by using its own public key, and decrypt the converted ciphertext encrypted by using its own public key.

**13.** A ciphertext processing system, comprising a ciphertext sending end, a ciphertext receiving end, a proxy, and a key generating mechanism, wherein:

the key generating mechanism is configured to release a system public parameter and partial private keys corresponding to the ciphertext sending end and the ciphertext receiving end;

the ciphertext receiving end is configured to calculate its own public key according to a random secret value selected by the ciphertext receiving end and the system public parameter, and publicize the public key;

the proxy is connected to the ciphertext receiving end and the ciphertext sending end;

the ciphertext sending end is configured to calculate a private key of a local end according to a random secret value selected by the local end and the partial private key acquired by the local end, calculate a public key of the local end according to the random secret value and the system public parameter, calculate a proxy key according to the private key of the local end and the public key publicized by the ciphertext receiving end, and send the proxy key to the proxy;

the proxy is configured to receive the proxy key sent by the ciphertext sending end, perform, according to the proxy key, a re-encryption operation on a ciphertext sent by the ciphertext sending end, convert the ciphertext to a ciphertext encrypted by using the public key of the ciphertext receiving end, and send the converted ciphertext to the ciphertext receiving end; and

the ciphertext receiving end is further configured to decrypt the converted ciphertext.

Key generating
mechanism — 30

— 10
Ciphertext
sending end

— 20
Ciphertext
receiving end

FIG. 1

Key generating
mechanism — 30

— 10
Ciphertext
sending end

— 40
Proxy

— 20
Ciphertext
receiving end

FIG. 2

FIG. 3

FIG. 4

```
                           ┌─────────────┐
                           │    Start    │
                           └──────┬──────┘
                                  │
                                  ▼
    ┌──────────────────────────────────────────────────────────────┐
    │  A ciphertext sending end calculates a private key of a       │──── S101
    │  local end according to a random secret value selected by     │
    │  the ciphertext sending end and a part of a private key       │
    │  acquired by the ciphertext sending end, and calculates a     │
    │  public key of the local end according to the random secret   │
    │  value and a system public parameter                          │
    └──────────────────────────────────┬───────────────────────────┘
                                        │
                                        ▼
    ┌──────────────────────────────────────────────────────────────┐
    │  The ciphertext sending end calculates a proxy key according  │──── S102
    │  to the private key of the local end and a public key         │
    │  publicized by the ciphertext receiving end                   │
    └──────────────────────────────────┬───────────────────────────┘
                                        │
                                        ▼
    ┌──────────────────────────────────────────────────────────────┐
    │  Send the proxy key, so that the ciphertext receiving end     │──── S103
    │  acquires a ciphertext obtained after a re-encryption         │
    │  operation is performed, according to the proxy key, on a     │
    │  ciphertext sent by the ciphertext sending end                │
    └──────────────────────────────────┬───────────────────────────┘
                                        │
                                        ▼
                           ┌─────────────┐
                           │     End     │
                           └─────────────┘
```

FIG. 5

Start

A ciphertext sending end acquires a system public parameter and a part of a private key of a local end released by a key generating mechanism — S201

The ciphertext sending end randomly selects a random secret value — S202

The ciphertext sending end calculates a private key of the local end according to a random secret value selected by the ciphertext sending end and a part of a private key acquired by the ciphertext sending end, and calculates a public key of the local end according to the random secret value and the system public parameter — S203

The ciphertext sending end randomly selects an integer as an encryption parameter — S204

The ciphertext sending end performs, according to the encryption parameter and its own public key, an encryption calculation on a message to be encrypted to obtain a ciphertext — S205

The ciphertext sending end calculates a proxy key according to the private key of the local end and a public key publicized by a ciphertext receiving end — S206

The ciphertext sending end sends the ciphertext and the proxy key — S207

The ciphertext receiving end performs, according to the received proxy key, an re-encryption operation on the received ciphertext to obtain a ciphertext encrypted by using the public key of the ciphertext receiving end, and decrypts, by adopting the private key of the local end, the ciphertext encrypted by using the public key of the ciphertext receiving end — S208

End

FIG. 6

```
                        ╔══════════ Start ══════════╗
                                      │
                                      ▼
┌─────────────────────────────────────────────────────────────────┐
│ A ciphertext sending end acquires a system public parameter and  │──── S301
│ a part of a private key of a local end released by a key         │
│ generating mechanism                                             │
└─────────────────────────────────────────────────────────────────┘
                                      │
                                      ▼
┌─────────────────────────────────────────────────────────────────┐
│ The ciphertext sending end randomly selects a random secret value│──── S302
└─────────────────────────────────────────────────────────────────┘
                                      │
                                      ▼
┌─────────────────────────────────────────────────────────────────┐
│ The ciphertext sending end calculates a private key of the local │──── S303
│ end according to a random secret value selected by the ciphertext│
│ sending end and a part of an acquired private key acquired by the│
│ ciphertext sending end, and calculates a public key of the local │
│ end according to the random secret value and the system public   │
│ parameter                                                        │
└─────────────────────────────────────────────────────────────────┘
                                      │
                                      ▼
┌─────────────────────────────────────────────────────────────────┐
│ The ciphertext sending end randomly selects an element in G₂ as  │──── S304
│ an encryption parameter                                          │
└─────────────────────────────────────────────────────────────────┘
                                      │
                                      ▼
┌─────────────────────────────────────────────────────────────────┐
│ The ciphertext sending end performs, according to the encryption │──── S305
│ parameter and its own public key, an encryption calculation on a │
│ message to be encrypted to obtain a ciphertext                   │
└─────────────────────────────────────────────────────────────────┘
                                      │
                                      ▼
┌─────────────────────────────────────────────────────────────────┐
│ The ciphertext sending end calculates a proxy key according to   │──── S306
│ the private key of the local end and the public key publicized by│
│ a ciphertext receiving end                                       │
└─────────────────────────────────────────────────────────────────┘
                                      │
                                      ▼
┌─────────────────────────────────────────────────────────────────┐
│ The ciphertext sending end sends the ciphertext and the proxy key│──── S307
└─────────────────────────────────────────────────────────────────┘
                                      │
                                      ▼
┌─────────────────────────────────────────────────────────────────┐
│ The ciphertext receiving end performs, according to the received │──── S308
│ proxy key, an re-encryption operation on the received ciphertext │
│ to obtain a ciphertext encrypted by using the public key of the  │
│ ciphertext receiving end, and decrypts, by adopting the private  │
│ key of the local end, the ciphertext encrypted by using the      │
│ public key of the ciphertext receiving end                       │
└─────────────────────────────────────────────────────────────────┘
                                      │
                                      ▼
                          (       End       )
```

**FIG. 7**

## INTERNATIONAL SEARCH REPORT

| International application No. |
|---|
| **PCT/CN2012/079260** |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, CNKI, VEN: key, partial private key, reencrypt+ or re-encrypt+ or (re 1w encrypt+), proxy, (semi 1w trust+), public key, private key, malicious, conspiracy, random

### C. DOCUMENTS CONSIDERED TO BE RELEVANT

| Category* | Citation of document, with indication, where appropriate, of the relevant passages | Relevant to claim No. |
|---|---|---|
| PX | CN 102404121 A (HUAWEI TECHNOLOGIES CO., LTD.), 04 April 2012 (04.04.2012), claims 1-13 | 1-13 |
| Y | CN 101710879 A (COMMUNICATION UNIVERSITY OF CHINA), 19 May 2010 (19.05.2010), claim 1, and description, paragraphs 0014-0021 | 1-13 |
| Y | CN 101257380 A (AISINO CORPORATION INC.), 03 September 2008 (03.09.2008), claims 1-7 | 1-13 |
| A | BLAZE, M. et al., Divertible protocols and atomic proxy cryptography. EUROCRYPT 98, LNCS, vol. 1403, pages 127-144, 1998 | 1-13 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 October 2012 (22.10.2012) | **08 November 2012 (08.11.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**YIN, Peng**<br><br>Telephone No.: (86-10) **62412180** |
|---|---|

Form PCT/ISA/210 (second sheet) (July 2009)

## INTERNATIONAL SEARCH REPORT
Information on patent family members

| | International application No. |
|---|---|
| | **PCT/CN2012/079260** |

| Patent Documents referred in the Report | Publication Date | Patent Family | Publication Date |
|---|---|---|---|
| CN 102404121 A | 04.04.2012 | None | |
| CN 101710879 A | 19.05.2010 | CN 101710879 B | 02.05.2012 |
| CN 101257380 A | 03.09.2008 | None | |

Form PCT/ISA/210 (patent family annex) (July 2009)

# INTERNATIONAL SEARCH REPORT

| International application No. |
|---|
| **PCT/CN2012/079260** |

**CONTINUATION OF SECOND SHEET: A. CLASSIFICATION OF SUBJECT MATTER**

H04L 9/08 (2006.01) i

H04L 9/30 (2006.01) i

Form PCT/ISA/210 (extra sheet) (July 2009)